# NEUE EUROPÄISCHE PATENTSCHRIFT

(11) **EP 0 547 522 B2**
(45) Veröffentlichungstag und Bekanntmachung des Hinweises auf die Entscheidung über den Einspruch: **17.03.1999**
(45) Hinweis auf die Patenterteilung: 22.11.1995
(21) Anmeldenummer: 92121146.2
(22) Anmeldetag: 11.12.1992
(51) Int. Cl.: F16D 51/18, F16D 65/00, B60T 1/06

(54) **Trommelbremse, insbesondere Feststellbremse für Kraftfahrzeuge**
Drum brake, especially parking brake for motor vehicle
Frein à tambour, spécialement frein de stationnement pour véhicule à moteur

(30) Priorität: 18.12.1991 DE 4141701
(43) Veröffentlichungstag der Anmeldung: 23.06.1993
(73) Patentinhaber: ITT Automotive Europe GmbH, 60488 Frankfurt (DE)
(72) Erfinder: Weiler, Rolf, W-6239 Eppstein 2 (DE); Panek, Claus-Peter, W-6374 Steinbach (DE); Czich, Erhard, W-6239 Eppstein (DE); Musolf, Jürgen, W-6000 Frankfurt/Main 1 (DE)

(56) Entgegenhaltungen:
- GB-A- 328 390
- GB-A- 950 530
- US-A- 2 928 510
- US-A- 3 850 266

## Beschreibung

Die Erfindung betrifft eine Trommelbremse, vorzugsweise eine mechanisch betätigte Feststellbremse für Kraftfahrzeuge, die bezüglich ihrer radialen Einbaumaße eine kompakte Bauart aufweist. gemäß dem Oberbegriff des Patentanspruchs 1.

Eine derartige Trommelbremse ist beispielsweise aus der US 3,850,266 bekannt. Diese bekannte Trommelbremse weist einen Bremsträger auf, der die Bremsbacken und eine Betätigungsvorrichtung trägt. Der Bremsträger ist mittels Befestigungsschrauben am Achsschenkel des Fahrzeugs befestigt, wobei die Befestigungsschrauben parallel zur Radachse und von der Fahrzeugaußenseite her nach innen einschraubbar sind. Diese Schraubrichtung wird im allgemeinen bevorzugt, weil die Montage der Bremse am Fahrzeug erleichtert wird, wenn die Schrauben von der Außenseite her zugänglich sind. Bei der bekannten Trommelbremse sind die Befestigungsschrauben in radialer Richtung innerhalb der Bremsbacken neben einer zum Durchgang der Radachse bestimmten Öffnung des Bremsträgers angeordnet.

Man ist allgemein bestrebt, Trommelbremsen, die nur als Feststellbremse oder im Notfall verwendet werden, aus Gründen der Gewichtsersparnis möglichst klein und kompakt zu gestalten. Andererseits gibt es eine Tendenz, die Radlagernaben angetriebener Achsen im Durchmesser zu vergrößern. Da der von der Radlagernabe eingenommene Raum nicht als Einbauraum für die Trommelbremse zur Verfügung steht, muß eine in herkömmlicher Weise aufgebaute Trommelbremse zwangsläufig in ihrem Durchmesser im gleichen Maß vergrößert werden wie die Radlagernabe.

Darüber hinaus offenbart die GB-A-950 530 eine gattungsgemäße Trommelbremse, bei der es in einem anderem Zusammenhang bekannt ist in einem im wesentlichen parallel zu einem Bremsträger verlaufenden Bremsbackensteg eine großflächige Öffnung vorzusehen. Durch eine derartige Öffnung soll ermöglicht werden eine ansonsten vom Bremsbackensteg verdeckte Schraube im Bremsträger für eine Montage erreichbar zu gestalten. Um allerdings eine solche freie Erreichbarkeit der Schraube für ein Montagewerkzeug umzusetzen, ist es erforderlich die Öffnung im Bremsbackensteg unerwünscht groß auszulegen. Damit wird jedoch in unnötig starkem Maße die Stegfestigkeit bzw. die Festigkeit der gesamten Bremsbacke beeinträchtigt. Des weiteren erweist es sich als schwierig, die Schrauben während der Montage durch die Öffnungen im Bremsbackensteg in den Bremsträger einzuführen.

Aufgabe der Erfindung ist es, eine gattungsgemäße Trommelbremse bei radial begrenzten Einbaumaßen, hinsichtlich der Montierbarkeit zu verbessern, so daß die Trommelbremse insbesondere als vormontierte Einheit vom Bremsenhersteller an der Fahrzeughersteller geliefert werden kann.

Die Lösung der Aufgabe ergibt sich aus dem kennzeichnenden Teil des Patentanspruchs 1.

Aus Gründen der leichten Montierbarkeit ist es somit vorgesehen, daß die Schraubenköpfe der Befestigungsschrauben einen größeren Außendurchmesser aufweisen als die kleinste Weite der zugehörigen Öffnung im Steg der Bremsbacke. Diese Anordnung hat den Vorteil, daß die erfindungsgemäße Bremse vom Bremsenhersteller als vormontierte Einheit an den Fahrzeughersteller geliefert werden kann. Bei der Fertigung der Bremse werden die Befestigungsschrauben zuerst durch dafür vorgesehene Öffnungen des Bremsträgers gesteckt und danach die Bremsbacken auf den Bremsträger montiert. Bei der fertig montierten Bremse sind die Schraubenköpfe der Befestigungsschrauben zwischen dem Bremsträger und den Stegen der Bremsbacken zwar locker, aber unverlierbar eingeschlossen. Die Weite der Öffnungen in den Stegen ist so gering, daß die Schraubenköpfe nicht hindurchpassen. Die geringe Weite der Öffnungen hat den weiteren Vorteil, daß das Material der Stege nur in sehr geringem Maß geschwächt wird.

Vorzugsweise sind die zum Durchgang eines Schraubwerkzeugs bestimmten Öffnungen gemäß Anspruch 2 in den Bereichen der Stege angeordnet, die von den beim Bremsen auftretenden Kräften nicht stark beansprucht werden. Aufgrund dieser Maßnahme wird die Steifigkeit der Stege nur unwesentlich beeinflußt, so daß die Stärke der Stege nicht vergrößert werden muß.

In einer bevorzugten Ausgestaltungform der Erfindung gemäß Anspruch 3 sind vier Befestigungsschrauben vorgesehen, die symmetrisch und in Umfangsrichtung gleichmäßig verteilt sind. Dadurch wird ein guter Kompromiß zwischen einer einfachen und einer sicheren Befestigung der Bremse am Fahrzeug erzielt.

Ein Ausführungsbeispiel der Erfindung wird nachfolgend anhand der Zeichnungen näher erläutert.

Es zeigen
- Fig, 1: eine teilweise geschnittene Draufsicht auf eine erfindungsgemäße Trommelbremse;

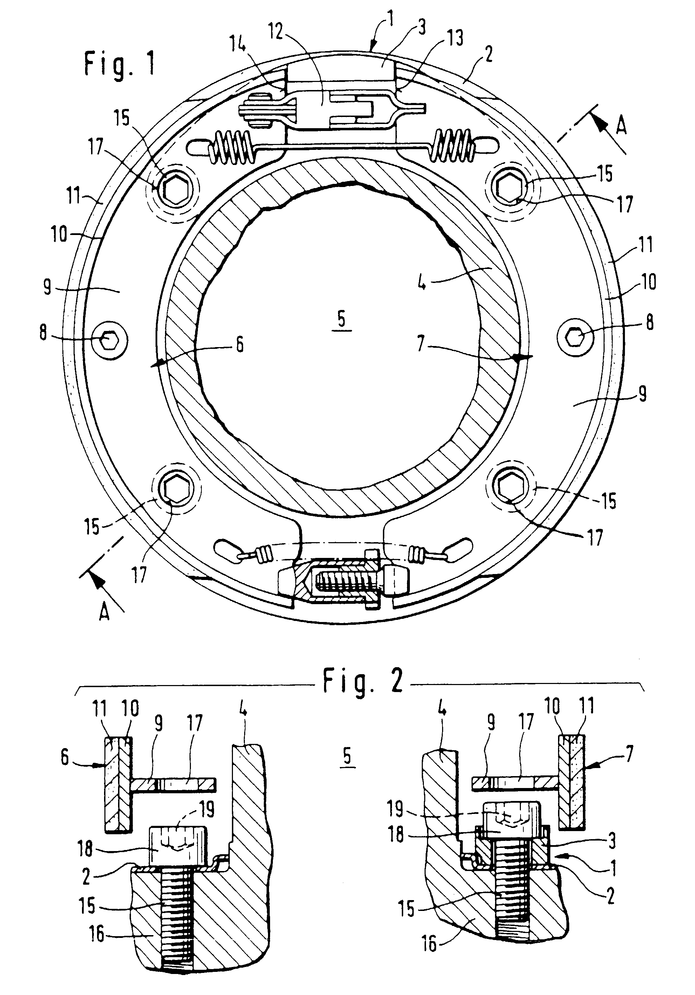

- Fig. 2: einen Schnitt gemäß Linie A-A von Fig. 1.

Die in Fig. 1 dargestellte Trommelbremse weist einen Bremsträger 1 auf, der aus einem im wesentlichen kreisringförmigen Trägerblech 2 und einem im wesentlichen sichelförmigen Verstärkungselement 3 besteht. In einer zentralen Öffnung des Trägerblechs 2 ist eine Radlagernabe 4 angeordnet, die sich durch den Innenraum der Bremse erstreckt. Im Innenraum 5 der Radlagernabe 4 ist ein nicht gezeigtes Radlager und eine nicht gezeigte Radachse angeordnet. Zwei Bremsbacken 6,7 sind mittels federnden Elementen 8 am Trägerblech 2 verschiebbar befestigt. Die Bremsbacken 6,7 sind jeweils aus einem sich radial nach innen auf die Radachse zu erstreckenden Steg 9, einem in Umfangsrichtung sich erstreckenden, senkrecht zum Steg 9 angeordneten Belagträgerblech 10 und einem Reibbelag 11 aufgebaut. Zur Betätigung der Trommelbremse ist ein Spreizschloß 12 vorgesehen, das am Bremsträger 1 zwischen zwei in Umfangsrichtung gegenüberliegenden Endflächen 13,14 der Bremsbacken 6,7 angeordnet ist. Bei Betätigung der Feststellbremse werden die Bremsbacken 6,7 durch das Spreizschloß 12 nach außen gedrückt, bis sie an einer inneren Reibfläche eines nicht gezeigten Bremsenrotors reibend anliegen. Die beim Bremsen auftretende Reibkraft wird über eine der Endflächen 13,14 von den Bremsbacken 6,7 auf das Verstärkungselement 3 übertragen.

Der Bremsträger 1 ist mittels vier Schrauben 15 am Achsschenkelflansch 16 des Fahrzeugs befestigt. Die Schrauben 15 erstrecken sich parallel zur Radachse und sind von der Fahrzeugaußenseite her nach innen eingeschraubt. Die Befestigungsschauben 15 sind in einem radial äußeren Bereich der Trommelbremse angeordnet, über den sich auch die Stege 9 der Bremsbacken 6,7 erstrecken. Um das Festziehen der Befestigungsschrauben 15 zu ermöglichen, sind die Stege 9 mit Öffnungen 17 zum Durchgang eines Schraubwerkzeugs versehen. Die Schraubenköpfe 18 weisen einen größeren

Durchmesser auf als die kreisrunden Öffnungen 17, so daß die Befestigungsschrauben 15 in der als Einheit vormontierten Trommelbremse zwischen dem Trägerblech 2 und den Stegen 9 unverlierbar eingeschlossen sind, auch wenn sie noch nicht in den Achsschenkelflansch 16 eingeschraubt sind. Die Schraubenköpfe 18 besitzen eine sechseckige Ausnehmung 19, die zum Eingriff eines Schraubwerkzeugs bestimmt ist. Die Befestigungsschrauben 15 und die dazugehörigen Öffnungen 17 sind in Umfangsrichtung mit gleichmäßigen Abständen und spiegelsymmetrisch angeordnet. Die Öffnungen 17 liegen dabei in Bereichen der Stege 9, die von den beim Bremsen auftretenden Kräften nicht stark beansprucht werden.

## Patentansprüche

1. Trommelbremse für Kraftfahrzeuge, mit zwei Bremsbacken (6,7), die jeweils einen in Richtung Radachse sich erstreckenden Steg (9) aufweisen, der zur Befestigung der Bremsbacken (6,7) und zur Übertragung der Bremsbetätigungskräfte und der Reibkräfte bestimmt ist, mit einem Bremsträger (1), der die Bremsbacken (6,7) und eine Betätigungsvorrichtung (12) zur Betätigung der Bremsbacken (6,7) trägt und der am Achsschenkel (16) des Fahrzeugs mit Befestigungsschrauben (15), angeschraubt ist, die in einem radial äußeren Bereich der Trommelbremse angeordnet sind, über den sich die Stege (9) der Bremsbacken (6,7) erstrecken, wobei die Stege (9) zumindest eine Öffnung zum Durchgang eines Schraubwerkzeugs aufweisen, so daß die im wesentlichen parallel zur Radachse verlaufenden Schrauben (15) von der Fahrzeugaußenseite her nach innen festschraubbar sind, dadurch gekennzeichnet daß, die Schraubenköpfe (18) der Befestigungsschrauben (15) einen größeren Außendurchmesser aufweisen als die kleinste Weite der zugehörigen Öffnung (17) im Steg (9) der Bremsbacke (6,7) und daß die Schraubenköpfe (18) eine zum Eingriff eines Schraubwerkzeugs bestimmte, vorzugsweise sechseckige Ausnehmung (19) aufweisen.

2. Trommelbremse nach Anspruch 1 dadurch **gekennzeichnet**, daß die zum Durchgang eines Schraubwerkzeugs bestimmten Öffnungen (17) in den Bereichen der Stege (9) angeordnet sind, die von den beim Bremsen auftretenden Kräften nicht stark beansprucht werden.

3. Trommelbremse nach einem der vorhergehenden Ansprüche, dadurch **gekennzeichnet,** daß vier Befestigungsschrauben (15) vorgesehen sind, die in Umfangsrichtung mit im wesentlichen gleichen Abständen angeordnet sind, wobei jeweils zwei Befestigungsschrauben (15) im Bereich einer Bremsbacke (6,7) und im wesentlichen symmetrisch zu dieser angeordnet sind.

## Claims

1. A drum brake for automotive vehicles, with two brake shoes (6, 7) which each include a stem (9) extending in the direction of the wheel axle and intended for the fixation of the brake shoes (6, 7) and the transmission of the brake actuating forces and the frictional forces, including a brake carrier (1) which carries the brake shoes (6, 7) and an actuating device (12) for the actuation of the brake shoes (6, 7) and is screwed to the steering knuckle (16) of the vehicle by fixing screws (15) which are positioned in a radially external range of the drum brake straddled by the stems (9) of the brake shoes (6, 7), and the stems (9) are formed with at least one opening for a screwing tool to be received therethrough so that the screws (15) which extend substantially in parallel to the wheel axle can be tightened from the external side of the vehicle inwardly,
**characterized** in that the external diameter of the screw heads (18) of the fixing screws (15) is larger than the smallest width of the associated opening (17) in the stem (9) of the brake shoe (6, 7), and in that the screw heads (18) include a recess (19) which is intended for accepting a screwing tool and, preferably, is hexagon-shaped.

2. A drum brake as claimed in claim 1,
**characterized** in that the openings (17) which are intended for a screwing tool to be received therethrough are positioned in those areas of the stems (9) which are not subject to heavy stresses due to the forces occurring during braking.

3. A drum brake as claimed in any one of the preceding claims,
**characterized** in that four fixing screws (15) are provided which are disposed in a circumferential direction substantially equally spaced from each other, and in each case two fixing screws (15) are positioned in the area of one brake shoe (6, 7) and substantially symmetrically in relation to the brake shoe.

## Revendications

1. Frein à tambour pour véhicule automobile, comprenant deux mâchoires de frein (6, 7), qui comportent chacune une âme (9) qui s'étend en direction de l'axe de roue et qui est destinée à la fixation de la mâchoire de frein (6, 7) et à la transmission des forces d'actionnement de frein et des forces de frottement, et un support de frein (1) qui porte les mâchoires de frein (6, 7) et un dispositif d'actionnement (12) servant à l'actionnement des mâchoires de frein (6, 7) et qui est vissé par des boulons de fixation à la fusée d'essieu (16) du véhicule, lesquels boulons (15) sont disposés dans une partie radialement extérieure du tambour de frein au-dessus de laquelle s'étendent les âmes (9) des mâchoires de frein (6, 7), les âmes (9) comportant au moins une ouverture destinée au passage d'un outil de vissage, de sorte que les boulons (15), qui s'étendent sensiblement parallèlement à l'axe de roue, peuvent être serrés de l'extérieur vers l'intérieur du véhicule, caractérisé en ce que les têtes (18) des boulons de fixation (15) ont un diamètre extérieur supérieur à la plus petite largeur libre de l'ouverture (17) associée ménagée dans l'âme (9) de la mâchoire de frein (6, 7), et en ce que les têtes (18) des boulons comportent une cavité (19), de préférence à six-pans, qui est destinée à la venue en prise d'un outil de vissage.

2. Frein à tambour selon la revendication 1, caractérisé en ce que les ouvertures (17) destinées au passage d'un outil de vissage sont situées dans les zones des âmes (9), lesquelles ne sont pas soumises à des sollicitations importantes par les forces se présentant lors du freinage.

3. Frein à tambour selon l'une quelconque des revendications précédentes, caractérisé en ce qu'il est prévu quatre boulons de fixation (15) qui sont disposés avec des espacements pratiquement identiques suivant la direction circonférentielle et en ce que, pour chacune des mâchoires de frein (6, 7), deux boulons de fixation (15) sont disposés dans la zone d'une mâchoire de frein (6, 7) et d'une manière pratiquement symétrique vis-à-vis de cette mâchoire.
